Europäisches Patentamt

European Patent Office

Office européen des brevets

(19)

(11) **EP 0 705 734 A1**

(12) **EUROPEAN PATENT APPLICATION**

(43) Date of publication:
10.04.1996 Bulletin 1996/15

(51) Int. Cl.⁶: **B60R 1/08**

(21) Application number: **95114218.1**

(22) Date of filing: **11.09.1995**

(84) Designated Contracting States:
**DE GB**

(30) Priority: **03.10.1994 JP 263171/94**

(71) Applicant: **MURAKAMI CORPORATION**
**Shizuoka-shi, Shizuoka, 422 (JP)**

(72) Inventors:
• **Iwama, Tokumitsu**
**Shimizu-shi, Shizuoka, 424 (JP)**

• **Nagao, Mitsuyoshi**
**Fujieda-shi, Shizuoka, 426 (JP)**

(74) Representative: **Dallmeyer, Georg et al**
**Patentanwälte**
**Von Kreisler-Selting-Werner**
**Bahnhofsvorplatz 1 (Deichmannhaus)**
**D-50667 Köln (DE)**

(54) **An electrochromic antiglare mirror**

(57) An electrochromic antiglare mirror includes a surrounding light sensor (10) for detecting quantity of light surrounding a vehicle and a rear light sensor (12) for detecting quantity of light in the rear of the vehicle. An amount of coloration is changed in accordance with quantities of light detected by these light sensors. An optical filter (77,79) of a fixed light transmittance is provided in front of a light receiving surface of either one or both of these light sensors for decreasing quantity of light incident to said light sensor or sensors.

F I G. 5

EP 0 705 734 A1

## Description

This invention relates to an electrochromic (hereinafter abbreviated as "EC") antiglare mirror used as an inside or outside mirror of a vehicle and, more particularly, to an EC antiglare mirror having an optimum sensitivity characteristic in a case where an amount of coloration is automatically controlled by detecting quantity of light surrounding or in the rear of the vehicle.

An EC antiglare mirror is made by covering the front surface of the reflecting surface of a mirror with an EC element film and achieves an antiglare effect against light from headlights of a succeeding vehicle while running at night by changing the amount of coloration of the EC element and thereby controlling reflectivity of the mirror. For obtaining such antiglare effect, the EC antiglare mirror has its amount of coloration automatically controlled in such a planner that, upon detection of quantity of incident surrounding and rear light, the amount of coloration increases (i.e., reflectivity decreases) when the surrounding light is weak and the light from the rear is strong whereas the amount of coloration decreases (the color fades, i.e., reflectivity increases) when the the surrounding light is weak and the light from the rear is also weak and also when the surrounding light is strong regardless whether the light from the rear is strong or weak.

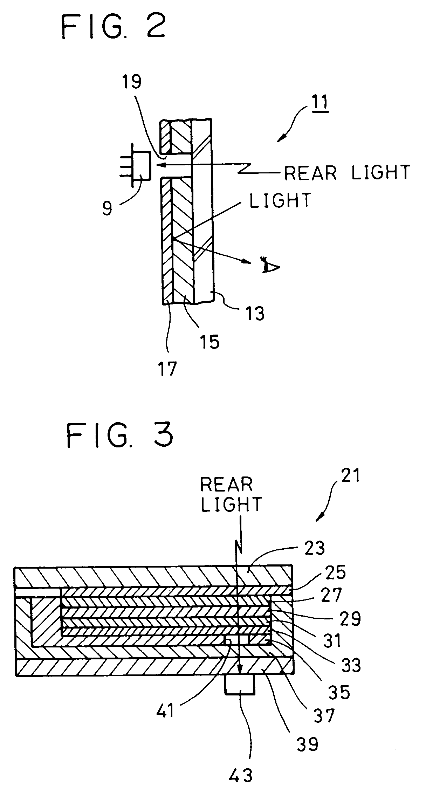

As an example of arrangement of a rear light sensor for detecting quantity of light from the rear in a prior art EC antiglare mirror, one disclosed in Japanese Utility Model Application Laid-open No. Hei 1-172027 is shown in Fig. 2. This EC antiglare mirror 11 is composed of a transparent substrate 13 and an EC element 15 and a reflecting layer 17 laminated at the back of the substrate 13. A part of the EC element 15 and the reflecting layer 17 is removed to form a window 19. A rear light sensor 9 is provided at the back of the window 19 to receive light from the rear.

As another example of arrangement of a rear light sensor of a prior art antiglare mirror, one disclosed in Japanese Utility Model Application Laid-open No. Hei 1-131731 is shown in Fig. 3. This EC antiglare mirror 21 is composed of a transparent substrate 21 and a transparent electrode 25, an oxidizing color imparting EC layer 27, an ion electric conducting layer 29, a reducing color imparting EC layer 31, a transparent electrode 33 and a reflecting electrode 35 laminated one upon another and the laminated elements are sealed in their entirety with a sealing resin 37 and a sealing glass 39. A part of the rear light reflecting electrode 35 is removed to form a window 41 and a rear light sensor 43 is disposed at the back of the window 41 to receive light from the rear.

According to the EC antiglare mirror 11 of Fig. 2, the rear light sensor 9 receives incident rear light substantially as it is and adjustment of sensitivity characteristic is performed by an electric circuit. As a result, this antiglare mirror has the disadvantage that it requires a complicate electric circuit. Further, since the rear surface of the reflecting layer 17 and portions of the EC layer 15 and the reflecting layer 17 exposed to the inner wall of the window 19 are exposed to air, they are vulnerable to corrosion and other damage. Furthermore, when it becomes necessary to apply a protective coating on the reflecting layer 17 and the inner wall of the window 19, masking must be made on the rear surface of the transparent substrate 13 to prevent the protective coating from extending to this portion and this requires an additional processing.

According to the EC antiglare mirror 21 of Fig. 3, since there are the EC layers 27 and 31 in front of the rear light sensor 43, the quantity of light received by the rear light sensor 43 is caused to change due to increase and decrease in coloration of the EC layers 27 and 31 notwithstanding that the same quantity of rear light is incident to the mirror. In EC elements which are quick in the EC response, increase and decrease in coloration are repeated as the quantity of received light changes with resulting occurrence of flickering.

Further, the rear light sensors 9 and 43 can be seen from a driver of a vehicle always in the antiglare mirror 11 of Fig. 2 and during color fading in the EC antiglare mirror 21 of Fig. 3 and this is disadvantageous in appearance. Furthermore, the EC antiglare mirrors 11 and 21 of Figs. 2 and 3 are colored in response to light of a red revolving light of an emergency vehicle and therefore there is likelihood that an approaching emergency vehicle is not noticed.

It is therefore an object of the invention to provide an EC antiglare mirror capable of easily setting an optimum sensitivity characteristic.

It is another object of the invention to provide an EC antiglare mirror which is not liable to be influenced by increase and decrease in coloration of the EC layer and besides the rear light sensor is not easily noticed by a driver of a vehicle.

It is another object of the invention to prevent deterioration of the EC element and the reflecting layer.

It is still another object of the invention to provide an EC antiglare mirror which does not respond to light of a red revolving light of an emergency vehicle.

An electrochromic antiglare mirror achieving the above described objects of the invention comprises a surrounding light sensor for detecting quantity of light surrounding a vehicle, a rear light sensor for detecting quantity of light in the rear of the vehicle, an amount of coloration being changed in accordance with quantities of light detected by these light sensors, and optical filter means of a fixed light transmittance provided in front of a light receiving surface of either one or both of these light sensors for decreasing quantity of light incident to said light sensor or sensors.

According to the invention, since the optical filter means of a fixed light transmittance is provided in front of a light receiving surface of either or both of the surrounding light sensor and the rear light sensor for decreasing quantity of light incident to these sensors, by selecting a filter characteristic of the optical filter means, an optimum sensitivity characteristic can be obtained without requiring a complicate electric circuit. Further, in a case where the optical filter means is provided for the rear light sensor, it is difficult for a driver of the vehicle to notice the rear light sensor and so appearance of the antiglare mirror improves.

In one aspect of the invention, there is provided an electrochromic antiglare mirror comprising a mirror main body having at least a transparent substrate, a transparent electrode, an electrochromic layer and an electrode/reflecting layer laminated in the order from a front surface side and being sealed in the rear with a sealing resin and a sealing glass, a surrounding light sensor for detecting quantity of light surrounding a vehicle, a rear light sensor for detecting quantity of light in the rear of the vehicle, an amount of coloration of said electrochromic layer being changed in accordance with quantities of light detected by these sensors, and a path for incident rear light being formed in such a manner that said mirror main body includes a portion in which the electrochromic layer and the electrode/reflecting layer are absent or a portion in which the transparent electrode and the electrochromic layer are absent and the electrode/reflecting layer constitutes a half mirror and said rear light sensor is disposed in the rear of said mirror main body so that rear light reaches a light receiving surface of the rear light sensor through the sealing resin and the sealing glass, and optical filter means of a fixed light transmittance provided in a part of the path for incident rear light from the rear surface of the transparent substrate to the light receiving surface of the rear light sensor for decreasing quantity of light incident to the rear light sensor.

According to this aspect of the invention, since the EC layer and the electrode/reflecting layer are removed in the path to the rear light sensor (the transparent electrode may be left unremoved) or the transparent electrode and the EC layer are removed from the path and the electrode/reflecting layer is made a half mirror so that the path passes through the sealing resin and the sealing glass and the filter means of a fixed light transmittance is provided on the path (including a case where the filter means consists solely of the half mirror), the rear light sensor can detect quantity of rear light without being affected by increase and decrease in coloration of the EC layer. Moreover, by selecting filter characteristic of the filter means, an optimum sensitivity characteristic can easily be obtained without requiring a complicate electric circuit. Besides, since the EC layer and the electrode/reflecting layer are sealed with the sealing resin and the sealing glass, these layers are not exposed to air and therefore deterioration of these layers can be prevented. Besides, existence of the filter means makes it difficult for the driver to notice the rear light sensor whereby appearance of the antiglare mirror improves.

In another aspect of the invention, the optical filter means is made of the sealing glass which is colored or formed in ground glass.

According to this aspect of the invention, component parts for composing the optical filter means can be obviated whereby increase in the component parts for the antiglare mirror can be prevented.

In another aspect of the invention, the optical filter means is made of the sealing resin which is colored.

According to this aspect of the invention, component parts for composing the optical filter means can be obviated whereby increase in the components parts for the antiglare mirror can be prevented.

In another aspect of the invention, the optical filter means is made of a film or a thin plate which is optically designed to absorb or reflect a part of incident light.

In another aspect of the invention, the optical filter means is optically designed to decrease a red wavelength region of visible ray in light incident to the rear light sensor.

According to this aspect of the invention, the rear light sensor does not respond to light of a red revolving light of an emergency vehicle so that approaching of the emergency vehicle can be accurately recognized by the driver.

Preferred embodiments of the invention will be described below with reference to the accompanying drawings,

In the accompanying drawings,

Figs. 1A, 1B and 1C are perspective and sectional views of an embodiment of the invention;
Fig. 2 is a sectional view showing an arrangement of a sensor in the prior art antiglare mirror;
Fig. 3 is a sectional view showing another example of a sensor in the prior art antiglare mirror;
Figs. 4A and 4B are sectional views showing an example of arrangement of filter means;
Fig. 5 is a block diagram showing an example of combination of the filter means according to the invention with the EC antiglare mirror drive device of Japanese Patent Application No. Hei 6-99291;
Fig. 6 is a circuit diagram showing a specific example of the device of Fig. 5;
Fig. 7 is a waveform diagram showing an oscillation output of oscillation means 14 of Fig. 6;
Figs. 8A, 8B and 8C are waveform diagrams showing change in the oscillation output of the oscillation means 14 of Fig. 6 in accordance with relation between quantity of surrounding light and quantity of rear light;
Fig. 9 is a graph showing an ideal division between a colored area and a faded area due to relation between quantity of surrounding light and quantity of rear light;
Fig. 10 is a graph showing an example of change in the mirror reflectivity to coloration duty of drive voltage in the EC antiglare mirror;
Fig. 11 is a graph showing change in the mirror reflectivity due to relation between quantity of surrounding light and quantity of rear light by the drive device of Fig. 6; and
Figs. 12A and 12B are perspective and sectional views of another embodiment of the invention.

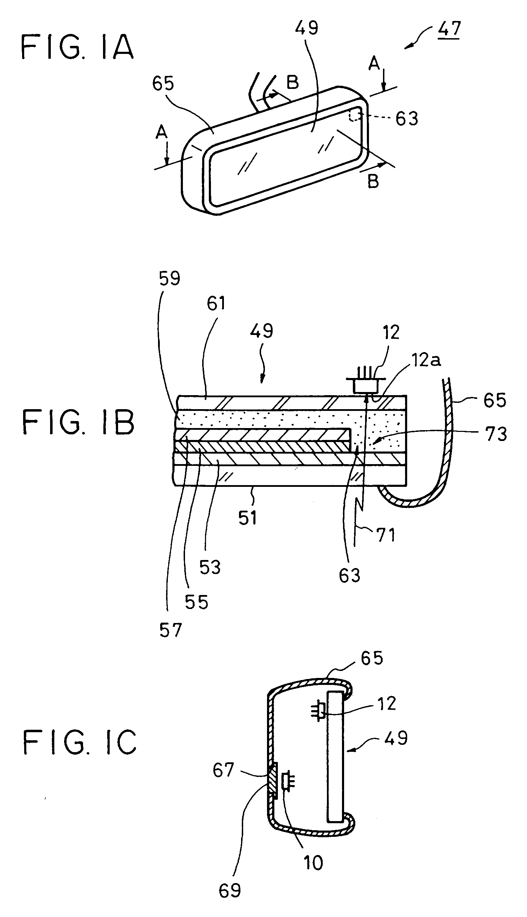

Referring now to Fig. 1, an embodiment of the invention will be described. Fig. 1A is a perspective view showing an outside of an EC antiglare mirror, Fig. 1B is a partial enlarged sectional view taken along arrows A-A and Fig. 1C is a sectional view taken along arrows B-B in Fig. 1A. An EC antiglare mirror 47 includes a mirror body 65 and a mirror main body 49 held in a front opening of the mirror body 65. The mirror main body 49 is composed of a transparent substrate 51 (glass), a transparent electrode 53, an EC layer 55 and an electrode/reflecting layer 57 laminated in the described order from the front side and the entirety of the laminate is sealed with a binder 59 which constitutes a sealing resin and a sealing glass 61. Instead of using the reflecting layer 57 also as an electrode, a separate transparent electrode may be provided on the front surface of the relfecting layer 57.

Corner portions of the EC layer 55 and the reflecting layer 57 in the mirror main body 49 are removed to form a recessed portion 63 and a rear light sensor 12 made of CdS or a like material is fixedly provided at the back of the recessed portion 63 in the main body 65. By this arrangement, rear light 71 is received by the rear light sensor 12 through the recessed portion 63. Therefore, quantity of light of the rear light 71 can be detected without being affected by increase and decrease in the EC layer 55. The EC layer 55 and the reflecting layer 57 are sealed with the sealing resin 59 and the sealing glass 61 from the outside air and thereby are prevented from deteriorating due to exposure to air.

For forming the recessed portion 63 in the EC layer 55 and the reflecting layer 57, the EC layer 55 and the reflecting layer 57 are formed on the entire surface of the mirror by vapor deposition for example and then a part thereof is removed by etching or other known method. Alternatively, the recessed portion 63 can be formed by masking the portion to form the recessed portion 63 and then the EC layer 55 and the reflecting layer 57 are formed by vapor deposition or a like method (the reflecting layer 57 should not extend over the EC layer 55).

In a part of an an incident light path 73 for the rear light 71 from the rear surface of the transparent substrate 51 to the light receiving surface 12a of the rear light sensor 12 is provided optical filter means of a fixed light transmission rate for decreasing quantity of incident light to the rear light sensor 12. The optical filter means can be constructed in one of the following manners:

(A) By means of the sealing glass 61
The optical filter means can be constructed with the sealing glass 61, i.e., by constructing the sealing glass 61 with a colored glass such as a bronze glass or by forming the rear surface of the sealing glass 61 in a ground glass by blasting.
(B) By means of the binder 59
The optical filter means can be constructed with the binder 59 by coloring the binder 59 with a dye.

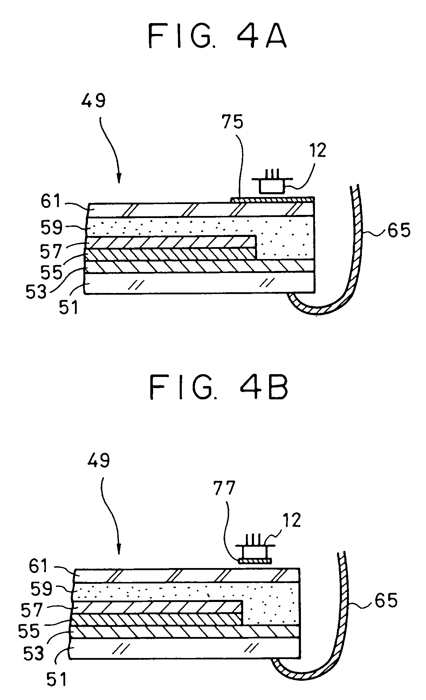

(C) By means of a separate material
As shown in Fig. 4A, an optical filter film (or thin plate) 75 made of a light absorbing material or a half mirror is attached to the rear surface of the sealing glass 61 to absorb or reflect a part of incident light and thereby decrease quantity of light incident to the rear light sensor 12. Alternatively, as shown in Fig. 4B, an optical filter film (or thin plate) 77 of a similar structure is attached to the front surface of the rear light sensor 12 to decrease quantity of light incident to the rear light sensor 12.

Two or three of the methods (A) to (C) can be also used concurrently. For making it difficult to respond to a red revolving light of an emergency vehicle, wavelength selection characteristic may be imparted to the sealing glass 61, binder 59, and optical filter films 75 and 77 so that a red color in the order of 650 nm to 700 nm will be selectively attenuated. More specifically, a film which is optically designed to reflect the red color in the order of 650 nm to 700 nm may be attached to the sealing glass 61 or the light receiving surface of the rear light sensor 12. Alterenatively, a material which absorbs red color in the order of 650 nm to 700 nm may be mixed in the binder 59 or the optical filter films 75 and 77. By such arrangement, it becomes difficult for the red color to reach the light receiving surface of the rear light sensor 12 and so the rear light sensor 12 becomes less responsive to the red revolving light of an emergency vehicle.

An alternative to the above described means (A) to (C) is to construct the electrode/reflecting layer 57 with a half mirror and form the electrode/reflecting layer 57 on the path 73 for the rear light 71 without removing a part thereof and thereby to impart the electrode/reflecting layer 57 with a function of filter means. In this case, a part of the transparent electrode 53 is removed for avoiding short circuiting between the transparent electrode 53 and the electrode/reflecting layer 57. By this arrangement, the filter means can be formed with the electrode/reflecting layer 57 only.

As shown in Fig. 1C, an opening 67 is formed in the rear side of the mirror body 65 and an optical filter plate 69 is fixedly fitted in this opening 67. In the mirror body 65, a surrounding light sensor 10 made of CdS or the like material is fixed at the back of the optical filter plate 69. The optical filter plate 69 functions to decrease quantity of light incident to the surrounding light sensor 10.

In Figs. 1A to 1C, an example in which the optical filter means are provided for both the sensors 10 and 12 is illustrated. However, depending upon the purpose of providing the antiglare mirror, the optical filter means may be provided on only one of these sensors. If, for example, the antiglare mirror is provided for the purpose of preventing response to a red revolving light, the optical filter means may be provided only for the rear light sensor 12. If provision of the optical filter means for only one sensor is sufficient for adjusting the sensitivity characteristic to a desired one, the optical filter means may be provided for one sensor only.

The adjustment of sensitivity characteristic by the optical filter means according to the invention will now be described. Description will be made about an example in which the optical filter means made according to the invention is incorporated in the device for driving an EC antiglare mirror proposed by the same applicant as the present application in Japanese Patent Application No. Hei 6-99291.

The first invention of the Japanese Patent Application No. Hei 6-99291 is a device for driving an EC antiglare mirror in which reflectivity is variably controlled by an EC element comprising: surrounding light quantity detection means for detecting quantity of light surrounding a vehicle; rear light quantity detection means for detecting quantity of light in the rear of the vehicle; oscillation means for generating an oscillation signal of "H" level and an oscillation signal of "L" level repeatedly and alternately, said oscillation means being capable of individually controlling duration of the "H" level and duration of the "L" level; inversion period control means for variably controlling duration of one of the "H" and "L" levels of the oscillation signal generated by said oscillation means in response to light quantity detected by said surrounding light quantity detection means and variably controlling duration of the other of the "H" and "L" levels of the oscillation signal in response to light quantity detected by said rear light quantity detection means; a drive power source for driving the EC element; and EC element drive means for inverting the polarity of drive voltage supplied from the drive power source in response to the "H" or "L" level of the oscillation signal generated by said oscillation means and applying the inverted drive voltage to the EC element, said inversion period control means performs control , when said EC element drive means is so set that it drives the EC element in a color imparting direction at the one level of the oscillation signal and in a color fading direction at the other level of the oscillation signal, in such a manner that, when the surrounding light quantity is larger, the duration of the one level is shorter and, when the surrounding light quantity is smaller, the duration of the one level is longer and that, when the rear light quantity is larger, the duration of the other level is shorter and, when the rear light quantity is smaller, the duration of the other level is larger and, when said EC element drive means is so set that it drives the EC element in a color fading direction at the one level of the oscillation signal and in a color imparting direction at the other level of the oscillation signal, in such a manner that, when the surrounding light quantity is larger, the duration of the one level is longer and, when the surrounding light quantity is smaller, the duration of the one level is shorter and that, when the rear light quantity is larger, the duration of the other level is longer and, when the rear light quantity is smaller, the duration of the other level is shorter.

The second invention of the above described Japanese patent application is a device for driving an EC antiglare mirror in which reflectivity is variably controlled by an EC element comprising: oscillation means comprising: first inversion period control means including a first photoconductive cell which receives light surrounding a vehicle and decreases its value of resistance in response to quantity of the surrounding light, first resistance and a first diode connected in series to the first photoconductive cell, and second resistance connected in parallel to the first photoconductive cell, and second inversion period control means including a second photoconductive cell which receives light in the rear of the vehicle and decreases its value of resistance in response to quantity of the rear light, third resistance and a second diode having a direction reverse to the first diode connected in series to the second photoconductive cell, and fourth resistance connected in parallel to the second photoconductive cell, said first inversion period control means and said second inversion period control means being arranged in parallel in a feedback loop, and, when the value of resistance of the first photoconductive cell decreases, duration of one of "H" and "L" levels of oscillation signals is shortened whereas, when the value of resistance of the second photoconductive cell decreases, duration of the other level of oscillation signals is shortened; a drive power source for driving the EC element; an EC element drive switching circuit which inverts the polarity of drive voltage supplied from the drive power source in accordance with the "H" or "L" level of the oscillation signal generated by the oscillation means and applies the inverted voltage to the EC element, said switching circuit applying voltage of a color imparting direction when the oscillation signal is at the one level and applying voltage of a color fading direction when the oscillation signal is at the other level.

According to the first invention, the degree of coloration is controlled by controlling duration of one level of the oscillation signal in accordance with the surrounding light quantity and controlling duration of the other level of the oscillation signal in accordance with the rear light quantity, and changing the duty factor of the oscillation signal. Since it is sufficient in the invention to control each individualy object of control for the surrounding light and the rear light, a structure for combining detected values of the surrounding light and the rear light is no longer required, so that the structure of the device can be simplified.

According to the second invention, control of duration of one level of the oscillation signal in accordance with the surrounding light quantity is made by the first inversion period control means and control of duration of the other level of the oscillation signal in accordance with the rear light quantity is made by the second inversion period control means. When the surrounding light is strong, the first and third resistance which are connected in series to the first and second photoconducive cells make coloration harder even when the rear light is strong. When the surrounding light is very weak, the second and fourth resistance which are connected in parallel to the first and second photoconductive cells prevent coloration which might otherwise occur due to very weak rear light.

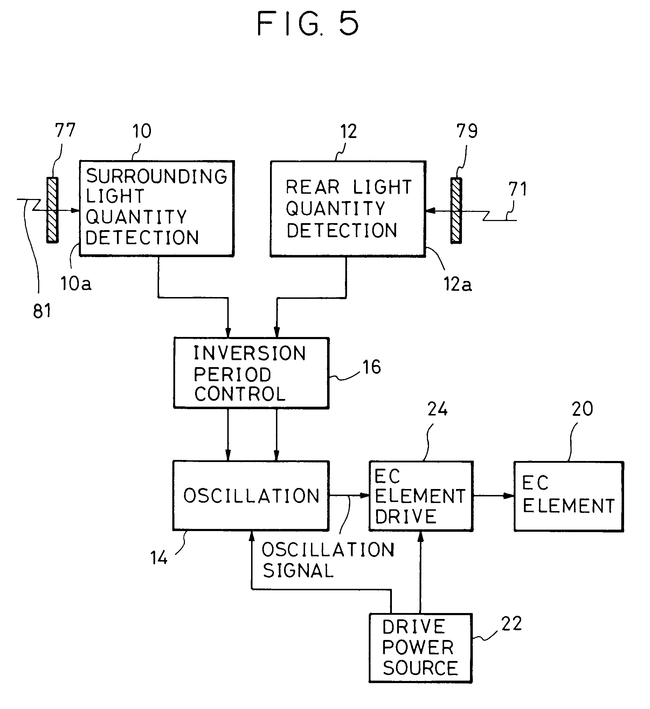

An embodiment in which the optical filter means made according to the invention is incorporated in the invention of the above described Japanese Patent Application No. Hei 6-99291 is shown in Fig. 5.

A surrounding light quantity detection circuit 10 (i.e., surrounding light sensor) detects quantity of light surrounding a vehicle and is disposed in a mirror body of, for example, an inside rear view mirror or an outside rear view mirror facing forward of the vehicle. Rear light quantity detection circuit 12 (rear light sensor) detects quantity of light from the rear of the vehicle and is disposed in the mirror body facing rearward of the vehicle. A filter 77 (e.g., optical filter plate 69 of Fig. 1C) is disposed in front of a light receiving surface 10a of the surrounding light quantity detection circuit 10 to attenuate surrounding light 81 properly. A filter 79 (e.g., sealing glass 61 and sealing resin 59 of Fig. 1B) is disposed in front of a light receiving surface 12a of the rear light quantity detection circuit 12 to attenuate rear light 71 properly. If only one of the filters 77 and 79 is sufficient for obtaining a desired sensitivity characteristic, the other is unnecessary.

An oscillation circuit 14 generates oscillation signals of "H" level and "L" level alternately and repeatedly. The oscillation circuit 14 is so constructed that duration of the "H" level and duration of the "L" level can be individually controlled. Oscillation period of the oscillation circuit 14 should preferably be 10 ms or below for concealing the glare of the light in fading and imparting of color from the human eye. An inversion period control circuit 16 variably controls duration of one of the "H" and "L" levels of the oscillation signals generated by the oscillation circuit 14 in response to the light quantity detected by the surrounding light quantity detection circuit 10. The inversion period control circuit 16 variably controls duration of the other of the "H" and "L" levels of the oscillation signals generated by the oscillation circuit 14 in response to the light quantity detected by the rear light quantity detection circuit 12.

A drive power source 22 supplies a drive power to the oscillation circuit 14 and the EC element 20. An EC element drive circuit 24 inverts the polarity of the drive voltage supplied from the drive power source 22 and applies the inverted voltage to the EC element 20, thereby controlling the amount of coloration in accordance with duty factor of the oscillation signal.

The control of duty factor by the inversion period control circuit 16 is as follows:

The inversion period control circuit 16 performs control, when the EC element drive circuit 24 is so set that it drives the EC element 20 in a color imparting direction at the one level of the oscillation signal and in a color fading direction at the other level of the oscillation signal, in such a manner that, when the surrounding light quantity is larger, the duration of the one level is shorter and, when the surrounding light quantity is smaller, the duration of the one level is longer and that, when the rear light quantity is larger, the duration of the other level is shorter and, when the rear light quantity is smaller, the duration of the other level is larger and, when the EC element dive circuit 24 is so set that it drives the EC element 20 in a color fading direction at the one level of the oscillation signal and in a color imparting direction at the other level of the oscillation signal, in such a manner that, when the surrounding light quantity is larger, the duration of the one level is longer and, when the surrounding light quantity is smaller, the duration of the one level is shorter and that, when the rear light quantity is larger, the duration of the other level is longer and, when the rear light quantity is smaller, the duration of the other level is shorter.

By this control, the amount of coloration is continuously controlled. That is, when the surrounding light is weak, sensitivity to the rear light increases and the amount of coloration increases with increase of the rear light quantity so that reflectivity drops and an antiglare state is realized. When the surrounding light is strong, sensitivity to the rear light decreases with resulting increase in difficulty in coloration and maintenance of a high reflectivity.

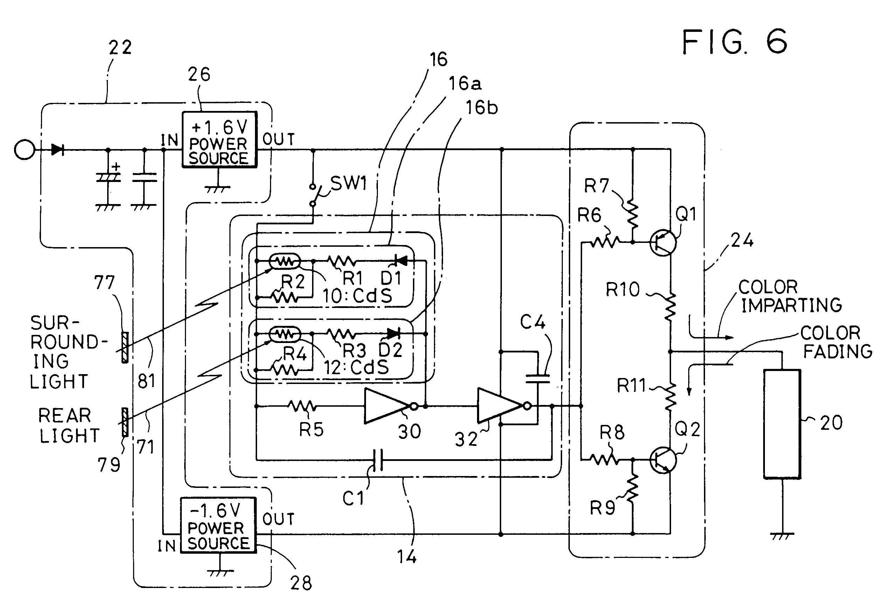

A specific example of the device for driving the EC antiglare mirror is shown in Fig. 6. In Fig. 6, components corresponding to those of Fig. 5 are designated by the same reference characters. In this circuit, it is assumed that an "L" level of an oscillation signal generated by the oscillation circuit 14 constitutes the one level and an "H" level constitutes the other level and that the one level is used for driving in the color imparting direction and the other level is used for driving in the color fading direction. A drive power source 22 receives dc voltage of + 12V from a battery and converts it to dc voltage of about + 1.6V by a positive power source circuit 26 and also to dc voltage of about - 1.6V by a negative power source circuit 28. By constructing these positive and negative power source circuits 26 and 28 with a switching power source, a power source circuit which is efficient and space saving when it is incorporated in the mirror body and which generates little heat can be realized.

The oscillation circuit 14 has inversion period control circuit 16 in its feedback loop. There are provided a surrounding light quantity detection circuit 10 and a rear light quantity detection circuit 12 in the inversion period control circuit 16.

The inversion period control circuit 16 of the oscillation circuit 14 includes a color imparting side pulse generation section 16a and a color fading side pulse generation section 16b. The color imparting side pulse generation section 16a includes CdS 10 constituting the surrounding light detection circuit, resistance R1 and a diode D1 connected in series to this CdS 10 and resistance R2 connected in parallel to the CdS 10. the color fading side pulse generation section 16b includes CdS 12 constituting the rear light detection circuit, resistance R3 and a diode D3 connected in parallel to this CdS 12 and resistance R4 connected in parallel to the CdS 12.

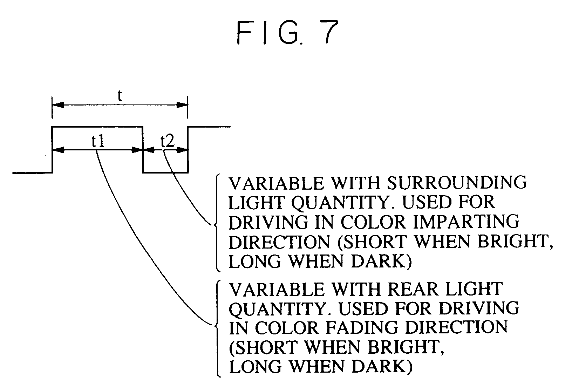

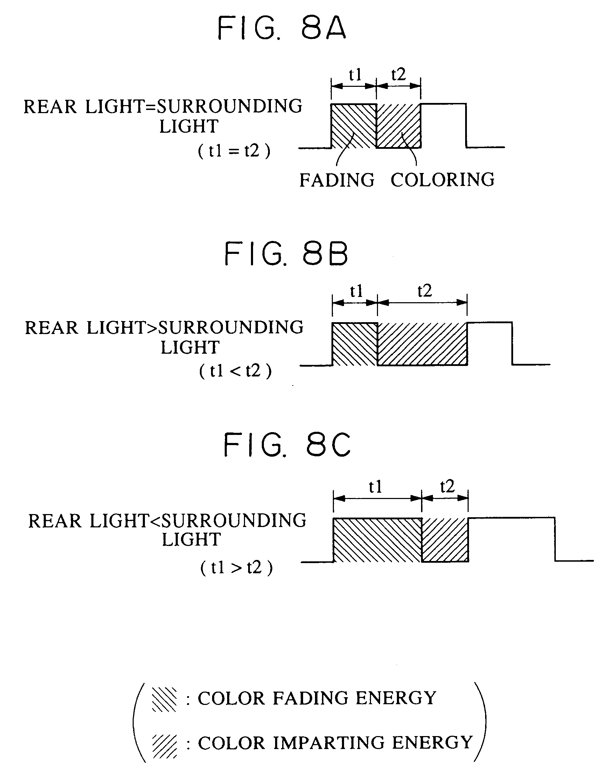

CdS has a characteristic according to which resistance decreases as quantity of light increases and resistance increases as quantity of light decreases. Therefore, in the oscillation signal generated by the oscillation circuit 14 of Fig. 6, as shown in Fig. 7, the period t1 of "H" level changes in response to rear light quantity (i.e., the period becomes shorter as light quantity increases, that is, as it becomes brighter) and the period t2 of "L" level changes in response to surrounding light quantity (i.e., the period becomes shorter as light quantity increases, that is, as it becomes brighter). When the surrounding light quantity and the rear light quantity are equal to each other, t1 becomes equal to t2 as shown in Fig. 8A. When the surrounding light quantity is smaller than the rear light quantity, t1 becomes smaller than t2 as shown in Fig. 8B. When the surrounding light quantity is larger than the rear light quantity, t1 becomes larger than t2 as shown in Fig. 8C. As will be described later, color fading energy is supplied to the EC element 20 during the period t1 and color imparting energy is supplied to the EC element 20 during the period t2 and, accordingly, a color imparting tendency appears when t1 is smaller than t2 and a color fading tendency appears when t1 is larger than t2.

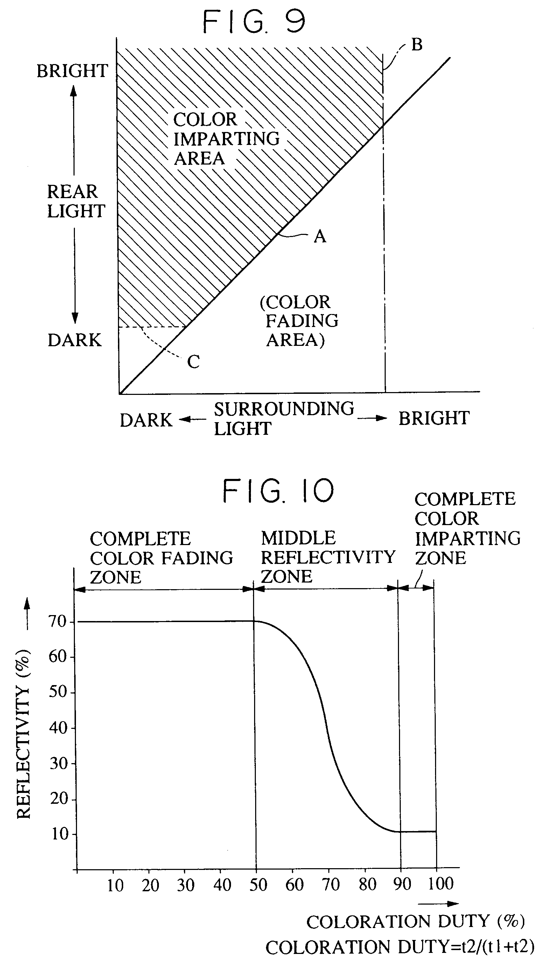

If, in controlling the amount of coloration in accordance with relation between surrounding light quantity and rear light quantity, division of a color imparting area and a color fading area is made along a solid line A in Fig. 9, there will arise a case where, when the surrounding light is strong (e.g., 5 to 30 lx or over) color is imparted if the rear light is strong notwithstanding that there is no need for coloration. Therefore, it is desirable that, when it is bright with the surrouning light being stronger than a predetermined value, this area should be made a color fading area as shown by a chain-and-dot line B regardless of the rear light quantity. Further, according to the division of area by the solid line A, there will arise a case where, when the surrounding light is very weak (e.g., 0.02 lx or below), even a very weak light from the rear will cause coloration. Therefore, it is desirable that, when it is dark with the surrounding light being below a predetermined value, this area below the predetermined value should be made a color fading area as shown by a dotted line C in Fig. 9.

The resistances R1 and R3 connected in series to the CdS 10 and 12 in Fig. 6 are provided for performing the function of the chain-and-dot line B in Fig. 9 and the resistances R2 and R4 connected in parallel to the CdS 10 and 12 are provided for performing the function of the dotted line C in Fig. 9. More specifically, the periods t1 and t2 of "H" and "L" levels of the oscillation output of the oscillation circuit 14 of Fig. 6 are expressed in the following manner:

$$t1 = \{(R4 \cdot r12)/(R4 + r12) + R3\} \cdot C1 \times 1.1 \quad (1)$$

$$t2 = \{(R2 \cdot r10)/(R2 + r10) + R1\} \cdot C1 \times 1.1 \quad (2)$$

where r10 represents resistance value of CdS 10 and r12 represents resistance value of CdS 12.

According to the equation (2), resistance value r10 of CdS 10 decreases as the surrounding light becomes stronger and, therefore the color imparting energy supply period t2 is shortened. However, since there is the resistance R1, the decreasing tendency of the period t2

is weakened as the surrounding light becomes stronger than a certain value. Further, according to the equation (1), resistance value r12 of CdS 12 decreases as the rear light becomes stronger and, therefore, the color fading energy suppy period t1 is shortened. However, since there is the resistance R3, the decreasing tendency of the period t1 is weakened as the rear light becomes stronger than a certain value. Consequently, in an area where both the surrounding light and the rear light are strong, the duty factor of the oscillation signal becomes stable at about 50% and difference between the color imparting energy and the color fading energy becomes small. Assuming now that characteristic of reflectivity of the EC antiglare mirror is as shown in Fig. 10, a high reflectivity characteristic is realized at the duty factor of about 50% and a color faded state thereby is maintained.

On the other hand, according to the equation (2), resistance value r10 of of the CdS 10 increases as the surrounding light becomes weaker and, therefore, the color imparting energy supply period t2 is prolonged. Since, however, there is the resistance R2, the increasing tendency of the period t2 is weakened when the surrounding light becomes weaker than a certain value. Further, according to the equation (1), resistance value r12 of the CdS 12 increases as the rear light becomes weaker and, therefore, the color fading energy supply period t1 is prolonged. Since, however, there is the resistance R4, the increasing tendency of the period t1 is weakened when the rear light becomes weaker than a certain value. Consequently, in an area where both the surrounding light and the rear light are weak, the duty factor of the oscillation signal becomes stable at about 50% and difference between the color imparting energy and the color fading energy thereby becomes small. Consequently, the EC antiglare mirror becomes of a substantially high reflectivity characteristic and the color faded state thereby is maintained.

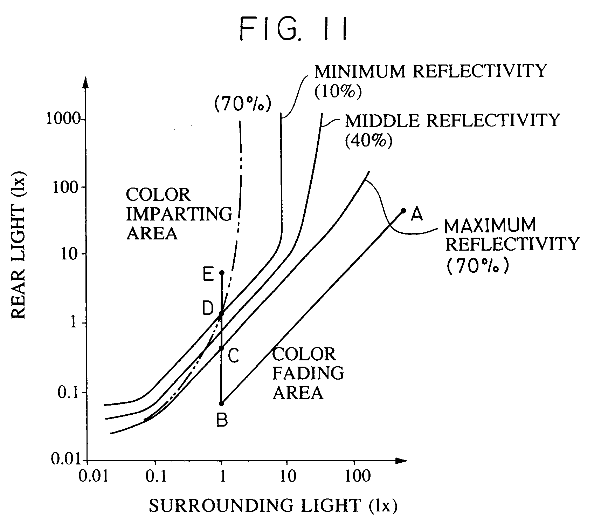

By the above described operation of the oscillation circuit 14, the EC antiglare mirror acquires a characteristic according to which reflectivity changes as shown in Fig. 11 depending upon the surrounding light and the rear light. In Fig. 11, let us assume a case where the sensitivity characteristic is changed in such a manner that the coloring start point C is shifted to point D. If this change is to be achieved by changing values of the resistances R1, R2, the curve of the maximum reflectivity of 70% becomes as shown by a chain-and-dot line in Fig. 11 showing that the balance of the curve is lost. If, on the other hand, this change is achieved by changing transmittance of the rear light filter 79 of Fig. 6 without changing the circuit, the curve of Fig. 11 is vertically shifted in parallel (i.e., the curve is shifted upwardly in parallel when transmittance decreases and it is shifted downwardly in parallel when transmittance increases) and the balance of the curve is maintained.

In Fig. 6, the oscillation circuit 14 produces oscillation signals having "H level of about + 1.6V and "L" level of about - 1.6V. A capacitor C4 is provided for preventing occurrence of noise on the power supply line. The EC element drive circuit 24 has two switching transistors Q1 and Q2 which are complementary push-pull connected between positive and negative power source voltages of about + 1.6V and - 1.6V. Resistances R6 and R7 are connected in series between the power supply line of about + 1.6V and the output terminal of the oscillation circuit 14 and voltage at the junction of the resistances R6 and R7 is applied to the base of the transistor Q1. Resistances R8 and R9 are connected in series between the power supply line of about - 1.6V and the output terminal of the oscillation circuit 14 and voltage at the junction of the resistances R8 and R9 is applied to the base of the transistors Q2. By adopting this construction, when the output of the oscillation circuit 14 is at the "H" level, the transistor Q1 is turned off and the transistor Q2 is turned on thereby supplying energy in the color fading direction to the EC element 20. When the output of the oscillation circuit 14 is at the "L" level, the transistor Q1 is turned on and the transistor Q2 is turned off thereby supplying energy in the color imparting direction to the EC element 20. Since resistances R10 and R11 which constitute energy supply restricting elements are connected in series to the transistors Q1 and Q2, supply of energy (supply of current) in the color imparting and color fading directions is restricted whereby power consumption and heating of the EC element 20 are restricted. Since the EC element 20 is electrically the same as capacity, time constant circuits are established with the resistances R10 and R11 (R10 and R11 are respectively 5 $\Omega$ ) whereby speed of response in color imparting and color fading is reduced. Accordingly, while running at night, too frequent repetition of coloration and color fading which is caused by street lights, shop lights and headlights of vehicles running on the opposite lane and is rather irritating to the human sense can be effectively prevented.

In Fig. 6, a switch SW1 is provided for fixing the output level of the oscillation circuit 14 compulsorily to the color fading mode by operation of the driver. When the switch SW1 is turned on, the oscillation circuit 14 stops oscillation because voltage on the input side of the inverter 30 is fixed to "H" level and, accordingly, the output level of the oscillation circuit 14 is fixed to "H" level. The transistor Q1 therefore is fixed to the off state and the transistor Q2 to the on state and the EC element 20 is brought into the color fading mode.

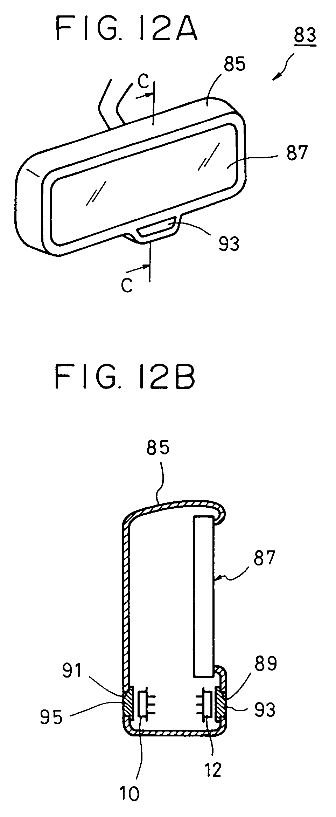

Another embodiment of the invention is shown in Figs. 12A and 12B. This EC antiglare mirror 83 has its sensors provided outside of the mirror region. In a front opening of a mirror body 85, there is fixedly secured a mirror main body 87. On the front and rear sides of the lower portion of the mirror body 85 are formed openings 89 and 91 optical filter plates 93 and 95 are fitted fixedly in these openings 89 and 91. At the back of the optical filter plates 93 and 95 are secured fixedly a rear light sensor 12 and a surrounding light sensor 10.

By selecting suitably transmittance of the optical filter plates 93 and 95, a desired sensitivity characteristic is obtained. If either one of the optical filter plates 93 and 95 is sufficient for obtaining a desired sensitivity characteristic, the other optical filter plate may be omitted. If the optical filter plate 93 is so constructed that it will attenuate red in the order of 650 nm to 700 nm, the sensors will become less responsive to a read revolving light.

In the above described embodiments, description has been made about a case where the invention is applied to an inner mirror. The invention is applicable also to an outer mirror.

## Claims

1. An electrochromic antiglare mirror comprising:
   a surrounding light sensor for detecting quantity of light surrounding a vehicle;
   a rear light sensor for detecting quantity of light in the rear of the vehicle, an amount of coloration being changed in accordance with quantities of light detected by these light sensors; and
   optical filter means of a fixed light transmittance provided in front of a light receiving surface of either one or both of these light sensors for decreasing quantity of light incident to said light sensor or sensors.

2. An electrochromic antiglare mirror comprising:
   a mirror main body having at least a transparent substrate, a transparent electrode, an electrochromic layer and an electrode/reflecting layer laminated in the order from a front surface side and being sealed in the rear with a sealing resin and a sealing glass;
   a surrounding light sensor for detecting quantity of light surrounding a vehicle;
   a rear light sensor for detecting quantity of light in the rear of the vehicle; an amount of coloration of said electrochromic layer being changed in accordance with quantities of light detected by these sensors; and a path for incident rear light being formed in such a manner that said mirror main body includes a portion in which the electrochromic layer and the electrode/reflecting layer are absent or a portion in which the transparent electrode and the electrochromic layer are absent and the electrode/reflecting layer constitutes a half mirror and said rear light sensor is disposed in the rear of said mirror main body so that rear light reaches a light receiving surface of the rear light sensor through the sealing resin and the sealing glass; and
   optical filter means of a fixed light transmittance provided in a part of the path for incident rear light from the rear surface of the transparent substrate to the light receiving surface of the rear light sensor for decreasing quantity of light incident to the rear light sensor.

3. An electrochromic antiglare mirror as defined in claim 1 wherein said optical filter means is made of the sealing glass which is colored or formed in ground glass.

4. An electrochromic antiglare mirror as defined in claim 2 wherein said optical filter means is made of the sealing resin which is colored.

5. An electrochromic antiglare mirror as defined in claim 2 wherein said optical filter means is made of a film or a thin plate which is optically designed to absorb or reflect a part of incident light.

6. An electrochromic antiglare mirror as defined in any of claims 1-5 wherein said optical filter means is optically designed to decrease a red wavelength region of visible ray in light incident to the rear light sensor.

FIG. IA

FIG. IB

FIG. IC

# FIG. 2

REAR LIGHT

LIGHT

# FIG. 3

REAR
LIGHT

# FIG. 4A

# FIG. 4B

EP 0 705 734 A1

# FIG. 5

Block diagram showing:
- 77, 10: SURROUNDING LIGHT QUANTITY DETECTION (10a)
- 12, 79: REAR LIGHT QUANTITY DETECTION (12a), 71
- 81
- 16: INVERSION PERIOD CONTROL
- 14: OSCILLATION
- OSCILLATION SIGNAL
- 24: EC ELEMENT DRIVE
- 20: EC ELEMENT
- 22: DRIVE POWER SOURCE

FIG. 6

SUR-ROUNDING LIGHT

REAR LIGHT

EP 0 705 734 A1

# F I G. 7

VARIABLE WITH SURROUNDING LIGHT QUANTITY. USED FOR DRIVING IN COLOR IMPARTING DIRECTION (SHORT WHEN BRIGHT, LONG WHEN DARK)

VARIABLE WITH REAR LIGHT QUANTITY. USED FOR DRIVING IN COLOR FADING DIRECTION (SHORT WHEN BRIGHT, LONG WHEN DARK)

# FIG. 8A

REAR LIGHT=SURROUNDING
LIGHT
( t1 = t2 )

t1  t2

FADING  COLORING

# FIG. 8B

REAR LIGHT>SURROUNDING
LIGHT
( t1 < t2 )

t1  t2

# FIG. 8C

REAR LIGHT<SURROUNDING
LIGHT
( t1 > t2 )

t1  t2

$$\left( \begin{array}{l} \text{: COLOR FADING ENERGY} \\ \text{: COLOR IMPARTING ENERGY} \end{array} \right)$$

# FIG. 9

# FIG. 10

COLORATION DUTY (%)

COLORATION DUTY=t2/(t1+t2)

FIG. 11

# FIG. 12A

# FIG. 12B

**European Patent Office**

## EUROPEAN SEARCH REPORT

Application Number

EP 95 11 4218

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 799 768 (GAHAN)<br>* the whole document *<br>--- | 1,6 | B60R1/08 |
| X | EP-A-0 253 686 (DONNELLY CORP.)<br>* page 5, line 29 - line 61; figure 2 *<br>--- | 1 | |
| A | US-A-5 223 814 (SUNAM)<br>* column 2, line 44 - column 4, line 46; figures 1-3 *<br>* column 5, line 52 - line 64 *<br>--- | 1 | |
| A | EP-A-0 614 784 (MURAKAMI KAIMEDO CO., LTD)<br>* claims 1-5 *<br>* page 3, line 13 - line 21 *<br>* page 6, line 43 - line 51; figure 3B *<br>--- | 1,2 | |
| A | US-A-5 253 109 (O'FARRELL ET AL.)<br>* column 1 - column 5, line 27; figures *<br>----- | 2 | |

TECHNICAL FIELDS SEARCHED (Int.Cl.6)

B60R

The present search report has been drawn up for all claims

| Place of search | Date of completion of the search | Examiner |
|---|---|---|
| THE HAGUE | 17 January 1996 | Dubois, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)